# EUROPEAN PATENT APPLICATION

(11) **EP 2 548 627 A1**
(43) Date of publication of application: **23.01.2013**
(21) Application number: 12170400.1
(22) Date of filing: 01.06.2012
(51) Int. Cl.: B01D 53/26, B01D 53/04, B60T 17/00

(54) **An air dryer filter**

(30) Priority: 20.07.2011 TR 201107171
(71) Applicant: Asas Filtre Sanayi Ve Ticaret Anonim Sirketi, Iskenderun, Hatay (TR)
(72) Inventor: Gocmen, Zekeriya, HATAY (TR)
(74) Representative: Iskender, Ibrahim

(57) **Abstract**

The invention relates to an air dryer filter characterized (1) by **comprising** housing (3), shell (7) placed in housing (3), desiccant (9) provided in the shell (7) for removing the moisture in the air and drying the air, compressing element (4) applying pressure against the lid (2), inlet opening (5) where air enters, outlet opening (16) where dried air exits, air passage channel (8) where the air advances towards the lid (2), inner seal element (12), seal element (13), outer seal element (14) and retainer lid (15), wherein the lid (2) is provided with a height (H) to outer diameter (R) (inner diameter of the housing (3)) ratio greater than 1/6 to prevent said lid (2) turning upside down due to volume loss of said desiccant (9) and vibration.

## Description

### Technical Field

The invention relates to an air dryer filter for separating air, which will pass from air compressor to the system, from moisture and oil thereof for the purpose of keeping the components comprised in the system functioning.

The invention relates to air dryer filter characterized in that it **comprises** housing, shell placed in housing, desiccant provided in the shell for removing the moisture in the air and drying the air, compressing element applying pressure against the lid, inlet opening where air enters, outlet opening where dried air exits, air passage channel where the air advances towards the lid, inner seal element, seal element, outer seal element and retainer lid, wherein the lid is provided with a height to outer diameter (R) (inner diameter of the housing) ratio greater than 1/6 to prevent said lid turning upside down due to volume loss of said desiccant and vibration.

### State of the Art

Generally, in the vehicles, air dryers are placed between air sources such as compressors and air reservoirs and comprise moisture absorbing materials such as silica gel,because existence of moisture in the air going from the air source to the system where it will be used may cause some components in the system to break down. For this reason, drying agent provided in the air dryer should be replaced periodically. Therefore, drying material is provided in a cartridge, which is removable from the air dryer. The said cartridge is replaced periodically due to the performance decline of drying material.

Following are the reasons for using air dryer filter in the vehicles:
o When the air is compressed, compressor takes in water vapor together with air and liquid water resulting from compression of water vapor is fed to the system;
o Water accumulated in air line may damage gaskets and valves and mix into the oil;
o Water may freeze in cold weather, block air line and damage system components.

In the air dryer filters, warm and moist air from the compressor is condensed into liquid water and water vapor before entering into the filter. An air dryer filter protects the air brake system of the vehicle by means of drying moisture laden air before entering into air reservoir and brake system.

There are two reasons for water accumulation in the dryer filter:
1- Warm air condenses into water before entering the dryer filter;
2- Warm air turns into water within the dryer filter before water reaches dehumidifier.

Moisture absorbing material eliminates water vapor by drying the air.

In the prior art, chemical substances, namely desiccants, which are used in air dryer filters and consist of granules for holding moisture, may undergo structural changes. Moreover, air dryer filter cannot fulfill its function as the desiccant loses volume and the lid length of the prior art air dryer filters is short. When the desiccant loses volume, the compressing element (spring), which bear against the lid from the top, cannot apply pressure against the lid anymore. The lid loses its function due to the short length thereof. In addition, granules come off and spread into the air dryer filter. Consequently, air dryer filter cannot fulfill its function since oil and moisture are not removed from air.

Another reason as to why air dryer filters cannot fulfill their functions is the vibration occurring in the vehicles. The short lid cannot fully cover the top of the desiccant and turns upside down during the vibration resulting from the operation of the vehicle and the system comprising the air dryer filter. Thus, as has been mentioned above, granules come off and air dryer filter cannot fulfill its function.

In conclusion, an improvement in the relevant art rendered necessary due to the negative aspects mentioned above and insufficiency of current solutions in the field.

### Object of the Invention

The invention is developed being inspired from existing conditions and seeks to solve the above mentioned drawbacks.

The object of the invention is to prevent the lid turning upside down, arising from vibrations, volume loss of granules and short lid length, thanks to a lid length outer diameter (inner diameter of the shell) ratio greater than 1/6, for enabling fulfillment of its functions.

Another object of the invention is to prevent the lid turning upside down by means of the tie pieces, provided on the lid, pressing against the top inner housing surface during the vibration.

Another object of the invention is to prevent release of the desiccant granules resulting from vehicle operating conditions and damage thereof to the system.

Another object of the invention is to provide an air dryer filter preventing the problems by means of separating the polluting oil from the air at the locations where contaminated air will enter.

Another object of the invention is to reduce the risk of breakdown arising from malfunctioning of the air dryer filters due to the lid turning upside down.

Another object of the invention is to prevent the damage to the system by means of preventing the breakdown of the air dryer filters.

The invention, for achieving the above mentioned objects, is an air dryer filter characterized in that it comprises housing, shell placed in housing, desiccant provided in the shell for removing the moisture in the air and drying the air, compressing element applying pressure against the lid, inlet opening where air enters, outlet opening where dried air exits, air passage channel where the air advances towards the lid, inner seal element, seal element, outer seal element and retainer lid, wherein the lid is provided with a height (H) to outer diameter (R) (inner diameter of the housing) ratio greater than 1/6 to prevent said lid turning upside down due to volume loss of said desiccant and vibration.

Another object of the invention is to provide ridges, which are formed on the top surface of the lid, close to the outer portion and prevent the lid turning upside down by resting against the housing during vibrations.

Another object of the invention is to provide ridges on the top surface of the lid with top edge thereof over the lid.

Another object of the invention is to provide ridges on the top surface of the lid having greater heights on the outer portion of the lid than those on the inner portion of the lid.

The structural and the characteristic features and all advantages of the invention will be understood more clearly with the detailed description written by referring to the following figures; therefore, the evaluation needs to be done by taking these figures and the detailed description into consideration.

### Figures Helping the Invention to Be Understood

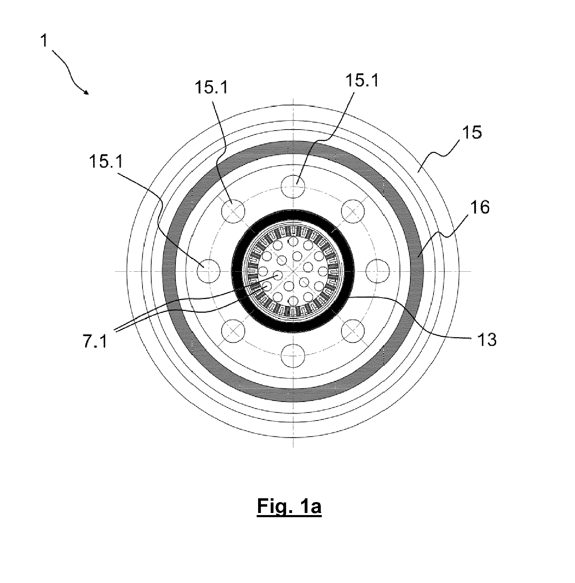

**Figure 1a** is two dimensional bottom view of the preferred embodiment of air dryer filter (1) according to the invention.

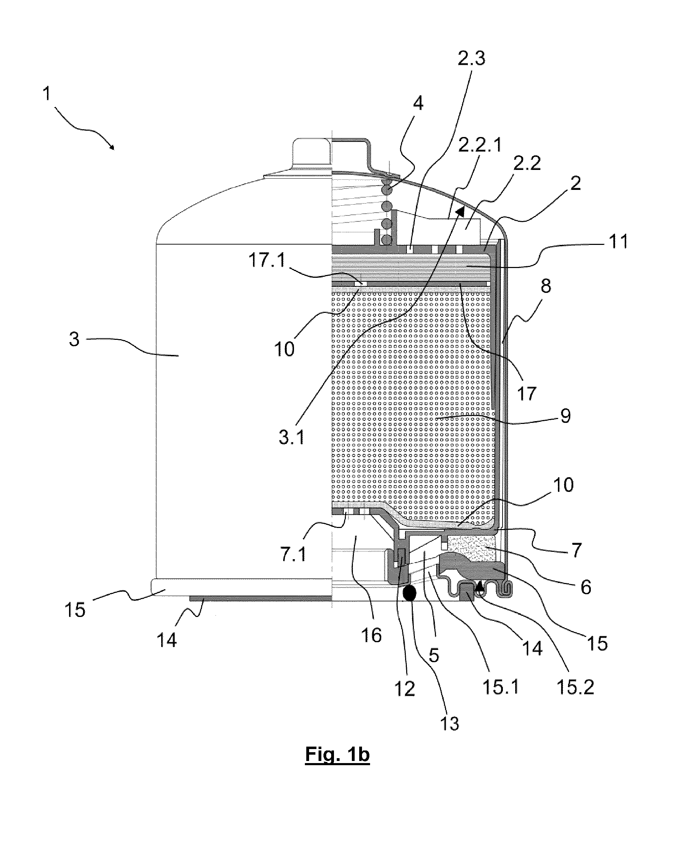

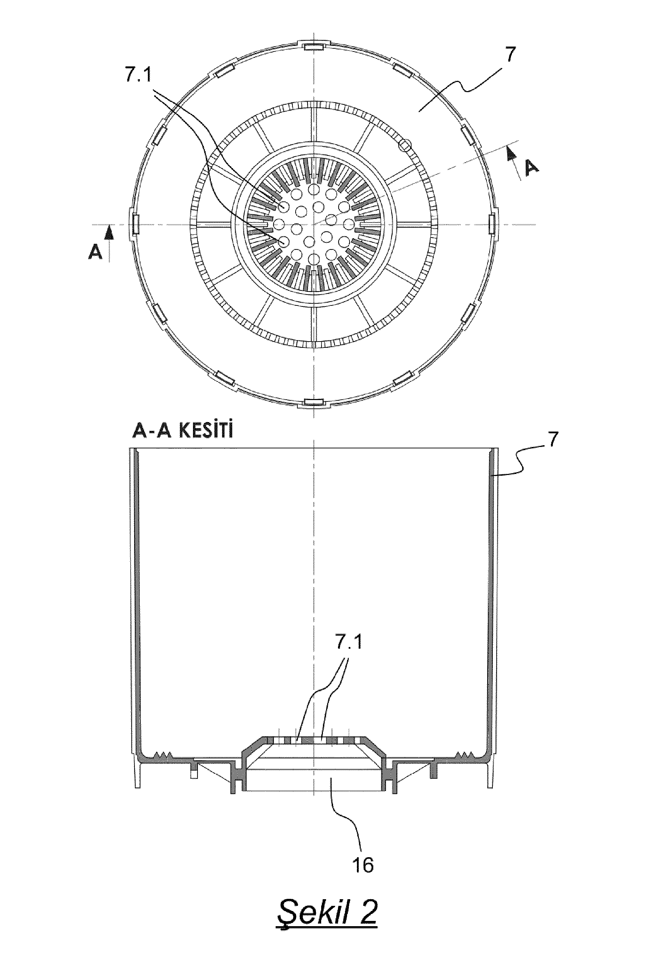

**Figure 1b** is two dimensional cross sectional side view of the preferred embodiment of air dryer filter according to the invention.
**Figure 2** is two dimensional bottom view of the preferred embodiment of air dryer filter after the sheet metal lid is removed.

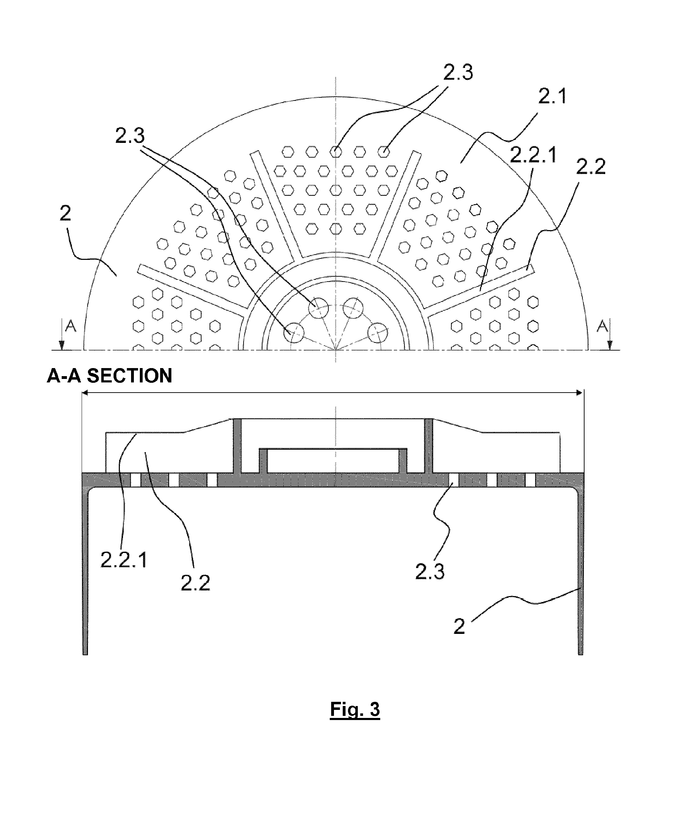

**Figure 3** is two dimensional top view of the lid according to the invention.

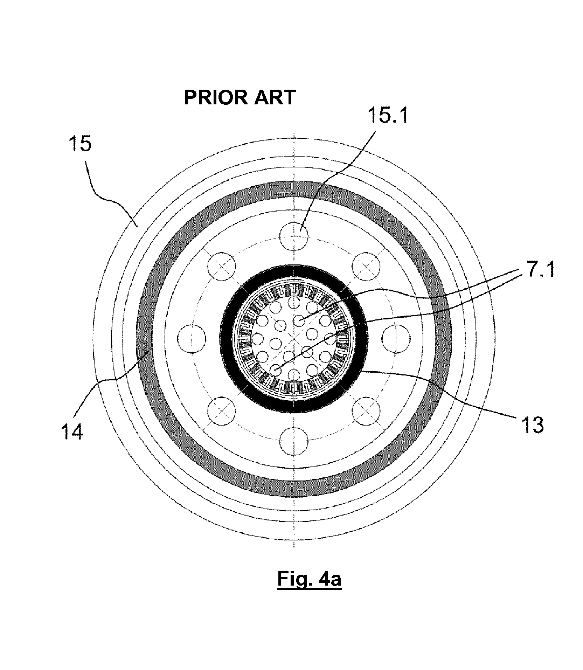

**Figure 4a** is two dimensional bottom view of the prior art air dryer filter.

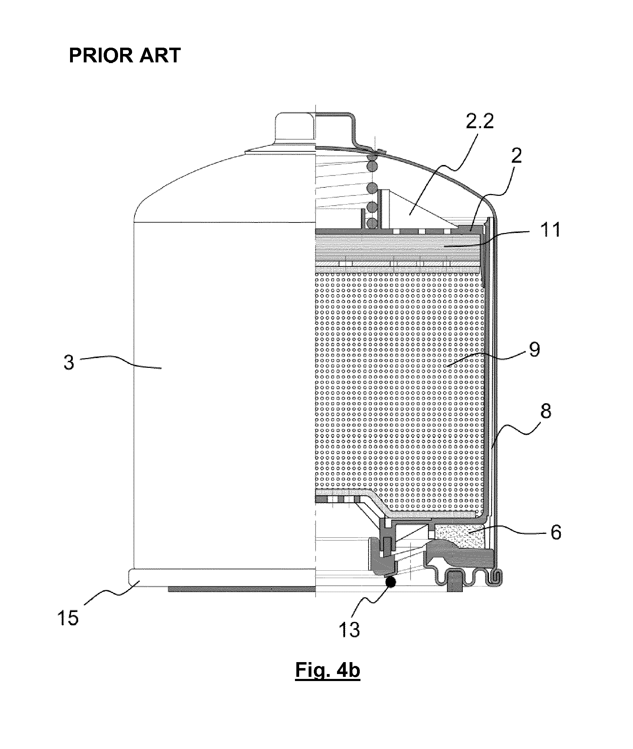

**Figure 4b** is two dimensional cross sectional side view of the prior art air dryer filter.

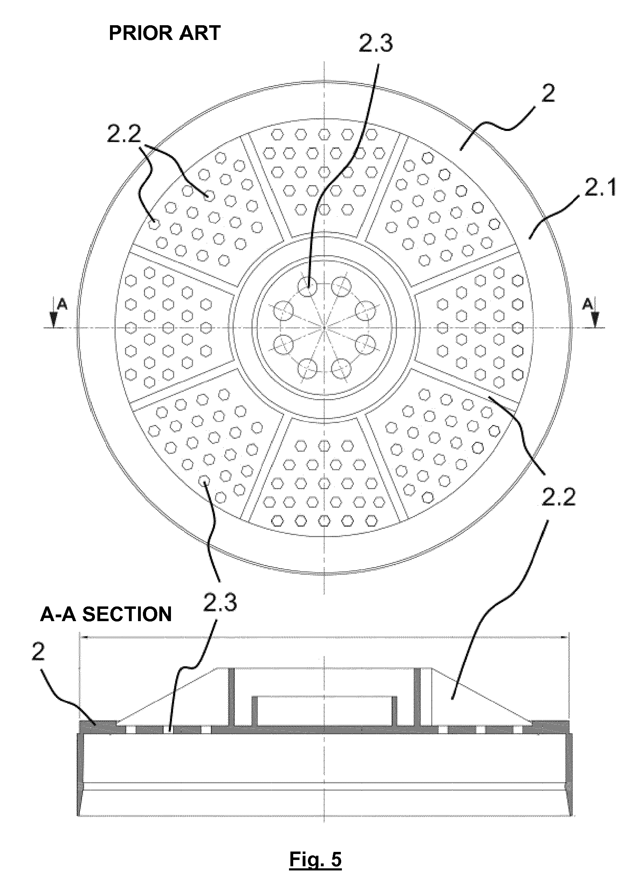

**Figure 5** is two dimensional top view of the lid used in the prior art air dryer filters.

### Description of Part References

- 1.: Air dryer filter
- 2.: Lid
2.1. Top surface
2.2. Ridge
2.2.1.
Top edge
2.3. Air inlet port
- 3.: Housing
3.1. Top inner surface
- 4.: Compressing element
- 5.: Inlet opening
- 6.: Pre-retaining element
- 7.: Shell
- 7.1.: Air outlet port
- 8.: Air passage channel
- 9.: Desiccant
- 10.: Granule retaining element
- 11.: Oil separating material
- 12.: Inner seal element
- 13.: Seal element
- 14.: Outer seal element
- 15.: Retainer lid
15.1. Air inlet port
15.2. Bottom surface
- 16.: Outlet opening
- 17.: Separator layer
17. 1. Air passage port

Scaling of drawings is not necessarily required; and the details, which are not needed for understanding the present invention, can be neglected. Furthermore, elements, which are at least substantially identical or have at least substantially identical functions, are indicated with the same number.

### Detailed Description of the Invention

In this detailed description, preferred embodiments of the air dryer filter (1) according to the invention are described only for a better understanding of the subject.

Air dryer filter (1) comprises the following:
- desiccant (9), which is provided in the shell (7) for removing the moisture in the air and drying the air;
- air passage channel (8) where the air advances towards the lid (2);
- at least one housing (3), which contains the inner filter elements, i.e. compressing element (4), shell (7), desiccant (9) and retainer lid (15); protects the elements contained therein from the exposure of the outside environment; and increases the strength of elements contained therein;
- at least one compressing element (spring) (4), which compresses the elements by pressing against the lid (2);
- inlet opening (5) where air enters;
- outlet opening (16) where dried air exits;
- at least one pre-retaining element (6), which serves as a pre-filter and provides the separation of foreign substances contained in the polluted air entering through the inlet opening (5);
- at least one shell (7), which separates moisture and oil by means of the elements contained therein and houses the desiccant (9) composed of granules containing chemical content which perform filtering;
- air passage channel (8), which is located between the housing (3) and the shell (7) and allows the air to advance towards the shell (7) for the separation of moisture and oil from the air entering in and pre-filtered by the pre-retaining element (6);
- granule retaining element (10), which is located in the shell (7) inlet and outlet and prevents the desiccant (9) to get out of the shell (7);
- an oil separating material (11), which is located in the shell (7) inlet and separates the oil contained in the air;
- separator layer (17), which prevents the contact between the granule retaining element (10) and the oil separating material (11);
- inner sealing gasket (12), which is positioned between inlet opening (5) and outlet opening (16) in the lower part of the shell (7) to prevent the mixing of newly entered air and clean air separated from oil and moisture within the filter (1);
- seal element (13), which is positioned in the inner portion of the air inlet ports (15.1) over the bottom surface (15.2) of the retainer lid (15) to provide sealing during mounting of the filter (1) to the system and to prevent the escape of cleaned air out of the system where filter is used;
- outer seal element (14), which is positioned over the bottom surface (15.2) of the retainer lid (15), prevents the passage of the polluted air, newly entered into the filter (1), to the outside environment and absorbs the vibrations and shocks to which the filter (1) may be exposed;
- at least one retainer lid (15), which houses said outer gasket (14) and prevents the air to escape outside of the filter (1) due to its wrapping structure;
wherein air dryer filter (1) is characterized in that the lid (2) is provided with a height (H) to outer diameter (R) (inner diameter of the housing (3)) ratio greater than 1/6 to prevent said lid (2) turning upside down due to volume loss of said desiccant (9) and vibration.

The ratio of lid (2) height (H), i.e. lid length (H), to the lid (2) outer diameter (R) is greater than 1/6. The outer diameter (R) of the lid (2) is also equal to the inner diameter (R) of the shell (7). Existing air dryer filters (1) cannot perform their functions due to vibrations arising from operating conditions of the vehicle or operation of the system where the filter (1) is contained in and volume loss of the desiccant (9). The reason for this is the spread of the granules contained within the desiccant (9) into the filter (1) owing to the position change of the lid (2), whose horizontal position permits performing its function, due to the above mentioned reasons. However, the lid (2) maintains its position thanks to the ratio of lid (2) height (H) to the lid (2) outer diameter (R) being greater than 1/6.

In the air dryer filter (1), ridges (2.2) are configured on the lid (2) in addition to the maintenance of the lid (2) position by means of the above mentioned equality. Ridges (2.2) are formed on the top surface (2.1) of the lid (2), close to the outer portion of the lid (2). These ridges (2.2) prevent the lid (2) turning upside down by resting against the housing (3) during vibrations. Said ridges (2.2) can be formed by having top edge (2.2.1) thereof parallel to the lid top surface (2.1), at the same time by having length thereof in the outer portion of the lid (2) being greater than that of in the inner portion of the lid (2). The important point here is that the ridges (2.2) press against top inner surface (3.1) of the housing (3) during the vibrations arising from the vehicle's operating conditions. Thus, the lid (2) is prevented from turning upside down.

In the air dryer filter (1) according to the invention, separation of moisture and oil from air takes place as follows. Polluted and moist air enters into the inlet opening (5) through the air inlet ports (15.1) provided on the retainer lid (15) located at the bottom part of the filter (1). Polluted and moist air entering the filter (1) is firstly separated from foreign substances contained therein by means of pre-retaining element (sponge) (6). Thus, damage of foreign substances to the filter (1) elements is prevented; in addition, functioning of filter (1) for long duration is obtained by avoiding the blockage of the filter (1). Polluted air separated from foreign substances contained therein advances to the upper portion of the lid (2) through the air passage channel (8) located between the housing (3) and the shell (7). Air reaching the upper portion of the lid (2) enters in through the air inlet ports (2.3) provided on the top surface (2.1) of the lid (2). The polluted air entering in through the air inlet ports (2.3) is separated from oil particles by means of the oil separating material (11) located below the lid (2). By means of this process, only moisture is left within the air and oil mixing into the structure of the desiccants (9), which will remove the moisture, is prevented. The air free of oil passes through the air passage ports (17.1) provided over the separator layer (17) and finally, it is separated from moisture by means of the desiccant (9) provided in the shell (7). Polluted air separated from moisture first passes through air outlet ports (7.1) provided in the lower part of the shell (7) as clean and dry air, and then leaves the filter (1) from the outlet opening (16) and is sent to the system where the filter (1) operates.

## Claims

1. Air dryer filter (1) which **comprises** housing (3), shell (7) placed in housing (3), desiccant (9) provided in the shell (7) for removing the moisture in the air and drying the air, compressing element (4) applying pressure against the lid (2), inlet opening (5) where air enters, outlet opening (16) where dried air exits, air passage channel (8) where the air advances towards the lid (2), inner seal element (12), seal element (13), outer seal element (14) and retainer lid (15), **characterized in that**
- the lid (2) is provided with a height (H) to outer diameter (R) (inner diameter of the housing (3)) ratio greater than 1/6 to prevent said lid (2) turning upside down due to volume loss of said desiccant (9) and vibration.

2. Air dryer filter (1) according to claim 1, wherein it comprises ridges (2.2), which are formed on the top surface (2.1) of the lid (2), close to the outer portion of the lid (2) and prevent the lid (2) turning upside down by resting against the housing (3) during vibrations.

3. Air dryer filter (1) according to claim 2, wherein it comprises ridges (2.2) having top edge (2.2.1) thereof parallel to the lid top surface (2.1).

4. Air dryer filter (1) according to claim 2, wherein it comprises ridges (2.2) on the top surface (2.1) of the lid having greater heights on the outer portion of the lid (2) than those on the inner portion of the lid (2).
